# EUROPEAN PATENT APPLICATION

(11) **EP 1 921 483 A1**
(43) Date of publication of application: **14.05.2008**
(21) Application number: 06783085.1
(22) Date of filing: 28.08.2006
(51) Int. Cl.: G02B 21/26

(54) **STAGE DEVICE**

(30) Priority: 30.08.2005 JP 2005249573
(71) Applicant: Olympus Corporation, Tokyo 151-0072 (JP)
(72) Inventor: NODA, Hiroaki, Mitaka-shi, Tokyo 181-0012 (JP)
(74) Representative: von Hellfeld, Axel
(86) International application number: PCT/JP2006/316856
(87) International publication number: WO 2007/026641

(57) **Abstract**

A glass slide is accurately held in position with a simple structure. A stage apparatus 1 is provided which includes mounting surfaces 3 on which a glass slide 2 is mounted, abutments 5a and 5b that butt against two adjacent side surfaces 2c and 2d, respectively, of the glass slide 2 mounted on the mounting surfaces 3, and a pressing mechanism 4 for pressing two side surfaces 2a and 2b opposite the two respective side surfaces 2c and 2d that butt against the abutments 5a and 5b in respective directions toward the abutments 5a and 5b. The pressing mechanism 4 includes a plurality of pressing members 11 and 12 for pressing the two side surfaces 2a and 2b, respectively, of the glass slide 2 at different timings.

## Description

### Technical Field

The present invention relates to stage apparatuses for mounting a glass slide in position.

### Background Art

One conventionally known stage apparatus for use with a microscope has a mechanism for supporting a glass slide in position (for example, see Patent Document 1).
This stage apparatus includes abutments that butt against two adjacent side surfaces of a glass slide mounted on a mounting surface and a clamping arm for pressing the glass slide toward the abutments. The clamping arm has two protrusions for pressing two side surfaces of the glass slide, opposite the two respective side surfaces that butt against the abutments, toward the abutments.

For the two protrusions of the clamping arm to hold the glass slide, they are pressed against the side surfaces of the glass slide by rotating the clamping arm about the axis thereof.
Patent Citation 1: U.S. Patent Application, Publication No. 2004/0114227

### Disclosure of Invention

The stage apparatus disclosed in Patent Document 1 above, however, uses a single clamping arm to move the two protrusions, which therefore contact the two side surfaces of the glass slide at about the same time. Accordingly, the glass slide is pressed against the two abutments at about the same time, thus causing friction between the pressed side surfaces of the glass slide and the abutments. In this case, if the glass slide mounted on mounting portions is inclined with respect to the abutments, the side surfaces of the inclined glass slide are pressed against the abutments while causing friction at their contact positions. This can cause the problem that the glass slide is held on the mounting portions while being inclined within the horizontal plane.

If the glass slide is held while being inclined within the horizontal plane, additionally, the holding of the glass slide becomes unstable. This can cause the problem that the glass slide is held while being inclined not only within the horizontal plane, but also in the vertical direction.

For microscopy with higher resolution, for example, a condenser lens for illumination must be positioned in the proximity of the bottom surface of the glass slide to illuminate the slide; the distance must be less than 1 mm. Hence, the glass slide is mounted on extremely thin mounting portions formed so as not to interfere with the condenser lens. Such mounting portions often lack rigidity because the contact area between the glass slide and the mounting portions is extremely narrow to achieve a larger observation area.

Under such conditions, pressing the two adjacent side surfaces of the glass slide using the single clamping arm can apply an excessive pressing force to either side surface.
This results in elastic deformation of the mounting portions, which causes the glass slide to be held while being inclined in the vertical direction. In this case, problems such as partial defocusing are encountered because the position of a specimen on the glass slide varies in the optical-axis direction of the objective lens.

An object of the present invention, which has been made under the above circumstances, is to provide a stage apparatus capable of accurately holding a glass slide in position with a simple structure.

To achieve the above object, the present invention provides the following solutions.
The present invention provides a stage apparatus including mounting surfaces on which a glass slide is mounted, abutments against which two adjacent side surfaces of the glass slide mounted on the mounting surfaces butt, and a pressing mechanism for pressing two side surfaces opposite the two respective side surfaces that butt against the abutments in respective directions toward the abutments. The pressing mechanism includes a plurality of pressing members for pressing the two side surfaces of the glass slide at different timings.

According to the present invention, the glass slide mounted on the mounting surfaces butts against the abutments under the operation of the pressing mechanism. In this case, the pressing mechanism includes the plurality of pressing members, which press the two side surfaces of the glass slide at different timings, so that the two adjacent side surfaces of the glass slide butt against the abutments separately. That is, the pressing member that starts pressing first forces one of the side surfaces of the glass slide to butt against one of the abutments before the next pressing member starts pressing the other side surface.

If the two adjacent side surfaces were pressed against the abutments at about the same time, the problem of the glass slide being held while being inclined might occur. According to the present invention, however, one of the pressing members forces the glass slide to butt against one of the abutments, thereby positioning the glass slide in one direction, before the other pressing member starts positioning in the other direction. This prevents the two side surfaces from being pressed at about the same time and therefore prevents the glass slide from being held while being inclined.

In the above invention, the abutments may butt against the two side surfaces of the glass slide over different spans, and the pressing mechanism may press the side surface opposite the side surface that butts against the abutments over a longer span before pressing the side surface opposite the side surface that butts against the abutments over a shorter span.
In this case, one of the side surfaces first butts against the abutments over the longer span under the operation of the pressing mechanism before the other side surface butts against the abutments over the shorter span. Because one of the side surfaces first butts over the longer span, inclination of the glass slide can be corrected. Subsequently, with its position maintained, the abutments can be used as a guide to accurately position the glass slide when the other side surface butts against the other abutments.

In the above invention, preferably, the pressing members each include an elastic member for producing a pressing force to press the side surfaces of the glass slide.
In this case, when the pressing members contact the glass slide, the glass slide is pressed by the pressing force based on the elastic force of the elastic members. When the side surfaces of the glass slide butt against the abutments, elastic deformation of the elastic members gradually increases the pressing force based on the elastic force. If the elastic members were not provided, the pressing force of the pressing members would be suddenly increased when the side surfaces of the glass slide butted against the abutments. As a result, the glass slide would be abruptly held because of a sudden increase in friction between the side surfaces of the glass slide and the abutments. According to the present invention, the elastic members operate to prevent such a sudden increase in friction between the side surfaces of the glass slide and the abutments, thus preventing the glass slide from being held while being inclined.

In the above invention, preferably, the pressing members each include an elastic member for producing a pressing force to press the side surfaces of the glass slide, and the elastic member of the pressing member for pressing the side surface opposite the side surface that butts against the abutments over the shorter span produces a larger pressing force than the elastic member of the pressing member for pressing the side surface opposite the side surface that butts against the abutments over the longer span.

In this case, the side surface that butts against the abutments over the shorter span experiences a larger pressing force than the side surface that butts against the abutments over the longer span. Because the side surface that butts over the longer span already butts against the abutments when the side surface that butts over the shorter span butts against the abutments, moving the glass slide causes friction. In the present invention, however, the glass slide can be moved against the friction because one pressing member is producing a larger pressing force.

In the above invention, the pressing mechanism may include a link mechanism for actuating the pressing members together.
In this case, the link mechanism operates to actuate the plurality of pressing members together, so that the operation of pressing the adjacent side surfaces at different timings can be achieved by a simple manipulation.

In the above invention, tapered surfaces may be provided at pressing ends of the pressing members that press the side surfaces of the glass slide so as to gradually extend backward toward the mounting surfaces.
In this case, when the pressing members press the side surfaces of the glass slide, the tapered surfaces provided on the pressing members contact the glass slide and press its side surfaces diagonally downward to prevent the glass slide from being raised. This prevents problems such as partial defocusing of a resultant image due to inclination of the glass slide in the vertical direction.

The present invention provides the benefit of accurately holding a glass slide in position with a simple structure by separately positioning two adjacent side surfaces of the glass slide at different timings.

### Brief Description of Drawings

[FIG. 1] Fig. 1 is a partial plan view showing a stage apparatus according to an embodiment of the present invention.
[FIG. 2] Fig. 2 is a partial back view showing a link mechanism for actuating the stage apparatus of Fig. 1.
[FIG. 3A] Fig. 3A is a partial side view showing the shape of ends of pressing members of the stage apparatus of Fig. 1 in the state before they contact a glass slide.
[FIG. 3B] Fig. 3B is a partial side view showing the shape of the ends of the pressing members of the stage apparatus of Fig. 1 in the state where they are pressing the glass slide.
[FIG. 4A] Fig. 4A is a partial side view showing the shape of ends of abutments of the stage apparatus of Fig. 1 in the state before they butt against the glass slide.
[FIG. 4B] Fig. 4B is a partial side view showing the shape of the ends of the abutments of the stage apparatus of Fig. 1, Fig. 4(b) showing the state where they butt against the glass slide.
[FIG. 5] Fig. 5 is a schematic sectional view of a carrier arm for transferring the glass slide to the stage apparatus 1 of Fig. 1.
[FIG. 6] Fig. 6 is a plan view illustrating an operation of transferring the glass slide with the carrier arm of Fig. 5.
[FIG. 7] Fig. 7 is a plan view illustrating an operation of moving the carrier arm out of the stage apparatus after the completion of the transfer operation of Fig. 6.
[FIG. 8] Fig. 8 is a plan view illustrating an operation of positioning the glass slide in a direction parallel to its short side in the stage apparatus of Fig. 1.
[FIG. 9] Fig. 9 is a plan view illustrating an operation of positioning the glass slide in a direction parallel to its long side in the stage apparatus of Fig. 1.

### Best Mode for Carrying Out the Invention

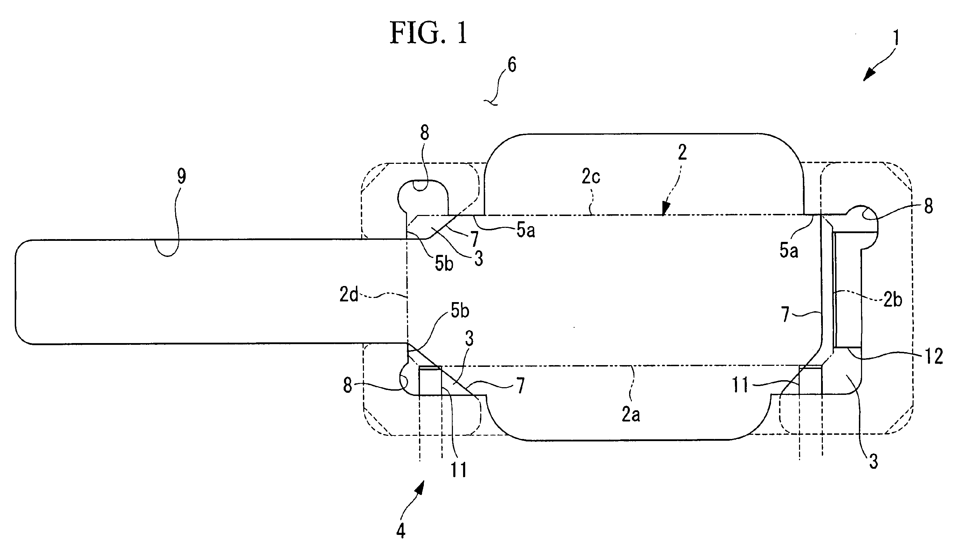

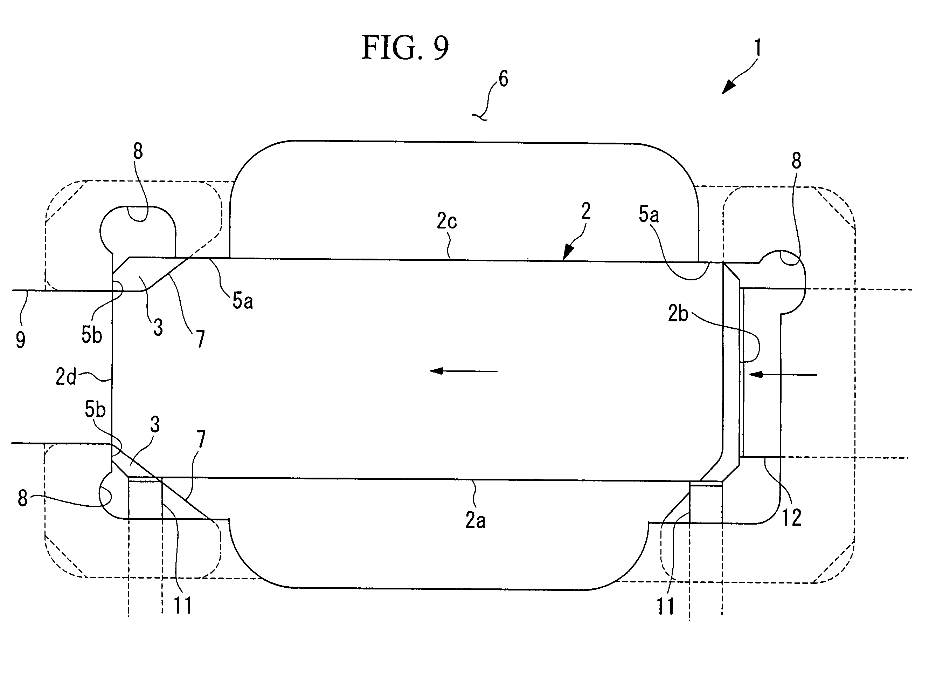

A stage apparatus 1 according to an embodiment of the present invention will now be described with reference to Figs. 1 to 9.
Referring to Fig. 1, the stage apparatus 1 according to this embodiment includes mounting surfaces 3 on which a glass slide 2 is mounted, a pressing mechanism 4 for pressing side surfaces 2a and 2b of the glass slide 2 mounted on the mounting surfaces 3, and abutments 5a and 5b against which the pressed glass slide 2 butts. For example, the glass slide 2 has a size of about 76 × 26 mm and a thickness of about 0.8 to 1.5 mm.

The mounting surfaces 3 are constituted by the top surfaces of steel sheets 7, for example, stainless steel sheets, fixed to the bottom surface of a stage body 6. The stage body 6 is formed by, for example, cutting aluminum alloy. While aluminum alloy has excellent machinability and can be machined into parts with high accuracy, sheets thereof have low strength and cannot achieve flatness with high accuracy. Because the mounting surfaces 3 are constituted by the steel sheets 7, they can achieve higher flatness while leaving a sufficient space to bring, for example, a condenser lens (not shown) into the proximity of the bottom surface of the glass slide 2 mounted on the mounting surfaces 3 over a large observation area.

The steel sheets 7, which constitute the mounting surfaces 3, are positioned so as to support at least the four corners of the glass slide 2. In the drawings, reference numeral 8 denotes cutouts provided in the stage body 6 to expose the top of the steel sheets 7 and to accurately form the abutments 5a and 5b, as described later. In the drawings, additionally, reference numeral 9 denotes a cutout provided in the stage body 6 for insertion of a carrier arm 10 carrying the glass slide 2, as described later.

In Fig. 1, the abutments 5a and 5b are disposed at positions corresponding to two adjacent side surfaces 2c and 2d, respectively, of the glass slide. The abutments 5a, disposed at the positions corresponding to the long side surface 2c, are positioned such that the vicinities of the ends of the long side surface 2c butt against the abutments 5a over a longer span. The abutments 5b, disposed at the positions corresponding to the short side surface 2d, are positioned such that the vicinities of the ends of the short side surface 2d butt against the abutments 5b. Because the short side is shorter, the abutments 5b are positioned such that the short side surface 2d butts over a shorter span than on the long side.

In Fig. 1, the pressing mechanism 4 includes pressing members 11 and 12 disposed opposite the abutments 5a and 5b, respectively, with the glass slide 2 located therebetween to press the side surfaces 2a and 2b, respectively, opposite the side surfaces 2c and 2d that butt against the abutments 5a and 5b. The two pressing members 11 are disposed on the long side of the glass slide 2 while the one pressing member 12 is disposed on the short side of the glass slide 2. The pressing members 11 and 12 are supported so as to be linearly movable in directions perpendicular to the side surfaces 2a and 2b, respectively, of the glass slide 2.

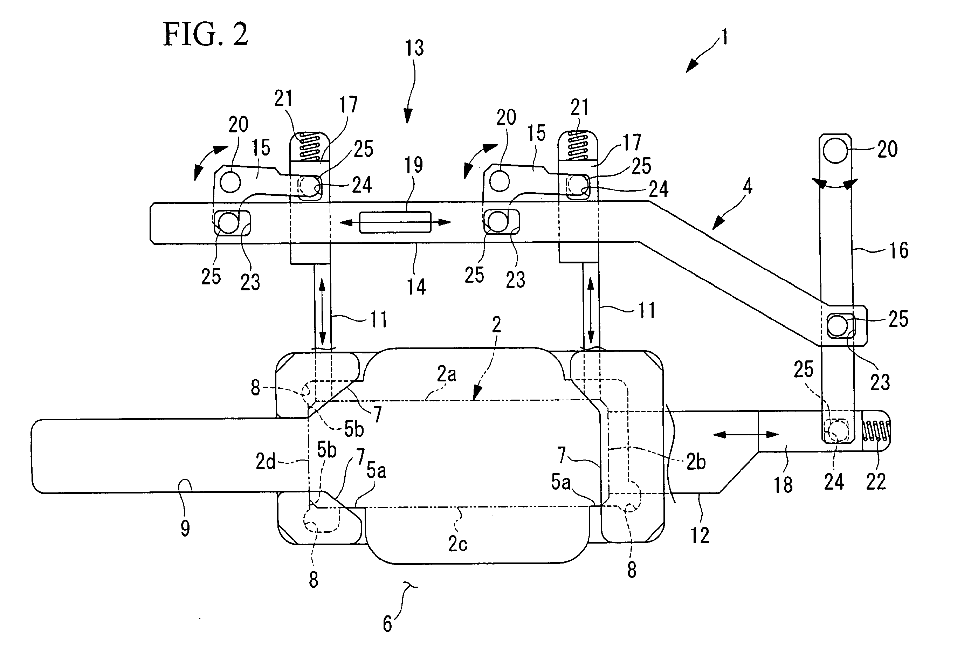

Referring to Fig. 2, the pressing mechanism 4 also includes a link mechanism 13 for actuating the pressing members 11 and 12 together. The link mechanism 13 includes a coupling link 14 supported so as to be movable substantially parallel to a direction in which the pressing member 12 is moved to press the short side surface 2b, levers 15 and 16 rotatable by the coupling link 14, and sliders 17 and 18 fixed to the respective pressing members 11 and 12. In the drawings, reference numeral 19 denotes a manipulation protrusion disposed on the coupling link 14, and reference numeral 20 denotes rotating shafts fixed to the stage body 6.

The sliders 17 and 18 have springs 21 and 22, respectively, for biasing the sliders 17 and 18 toward the glass slide 2 relative to the stage body 6. Thus, the sliders 17 and 18 are constantly biased in such directions as to press the pressing members 11 and 12, respectively, against the glass slide 2. The spring 22 used for the slider 18 to which the pressing member 12 is fixed to press the short side surface 2b of the glass slide 2 is one capable of producing a larger elastic force than the springs 21 used for the sliders 17 to which the pressing members 11 are fixed to press the long side surface 2a of the glass slide 2. In addition, the springs 21 and 22 used are ones capable of producing the minimum elastic forces required to reliably hold the side surfaces 2a and 2b, respectively, of the glass slide 2.

The coupling link 14 and the sliders 17 and 18 have elongated holes 23 and 24, respectively, at positions where they are connected to the levers 15 and 16, and the levers 15 and 16 have bosses 25 inserted in the elongated holes 23 and 24, with gaps left therebetween. Thus, some play is left to convert orbital motion of the ends of the levers 15 and 16 into linear motion of the coupling link 14 and the sliders 17 and 18.

The elongated holes 23 and 24 are positioned so that the plurality of levers 15 and 16 are actuated at appropriate timings to move the respective pressing members 11 and 12.
In Fig. 2, specifically, as the coupling link 14 is moved to the right, the elongated hole 23 of the coupling link 14 and the boss 25 of the lever 16 in the elongated hole 23 contact each other first, so that the lever 16 starts rotating counterclockwise. This causes the boss 25 at the end of the lever 16 to contact the elongated hole 24 of the slider 18 and to move the slider 18 to the right against the elastic force of the spring 22. Thus, the pressing member 12 pressing the short side surface 2b of the glass slide 2 starts moving linearly in a direction away from the side surface 2b of the glass slide 2.

At this time, the bosses 25 of the levers 15 are yet to contact the elongated holes 23 of the coupling link 14, and the levers 15 remain at rest. With the pressing member 12 moved by a predetermined distance, the bosses 25 of the levers 15 contact the elongated holes 23 in which they are inserted, so that the levers 15 start rotating counterclockwise. This causes the bosses 25 of the levers 15 to push the elongated holes 23 and the sliders 17 to start moving linearly in a direction away from the glass slide 2. As a result, the pressing members 11 pressing the long side surface 2a of the glass slide 2 start moving linearly in the direction away from the side surface 2a.

Conversely, as the coupling link 14 is moved to the left in Fig. 2 with the pressing members 11 and 12 separated from the side surfaces 2a and 2b, respectively, of the glass slide 2, the pressing members 11 first contact the long side surface 2a of the glass slide 2 and push the glass slide 2 by the elastic force of the springs 21. The glass slide 2 is moved until it butts against the abutments 5a and is held between the pressing members 11 and the abutments 5a.

At this time, the pressing member 12 is yet to contact the short side surface 2b. As the coupling link 14 is further moved to the left, the pressing member 12 contacts and pushes the short side surface 2b of the glass slide 2.

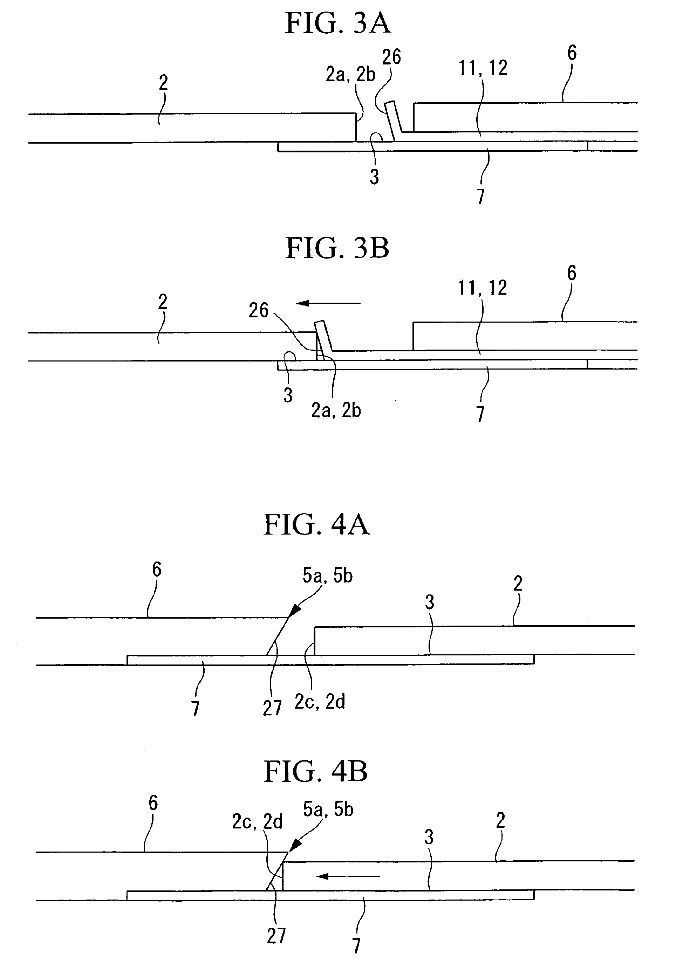

Referring to Figs. 3A and 3B, the ends of the pressing members 11 and 12 in contact with the side surfaces 2a and 2b of the glass slide 2 have tapered surfaces 26 inclined gradually upward to the ends. Referring to Figs. 4A and 4B, the abutments 5a and 5b have tapered surfaces 27 inclined gradually upward to the ends. The tapered surfaces 26 and 27 have such a size that the edges of the top surface of the glass slide 2 can contact the tapered surfaces 26 and 27 midway in the height direction thereof. Preferably, the tapered surfaces 26 and 27 are inclined at an angle of 45° or more.

The operation of the stage apparatus 1 according to this embodiment, thus configured, will now be described.
To hold the glass slide 2 on the stage apparatus 1 according to this embodiment, first, the glass slide 2 is manually mounted on the mounting surfaces 3 or is mounted on the carrier arm 10 before being transferred to the mounting surfaces 3.

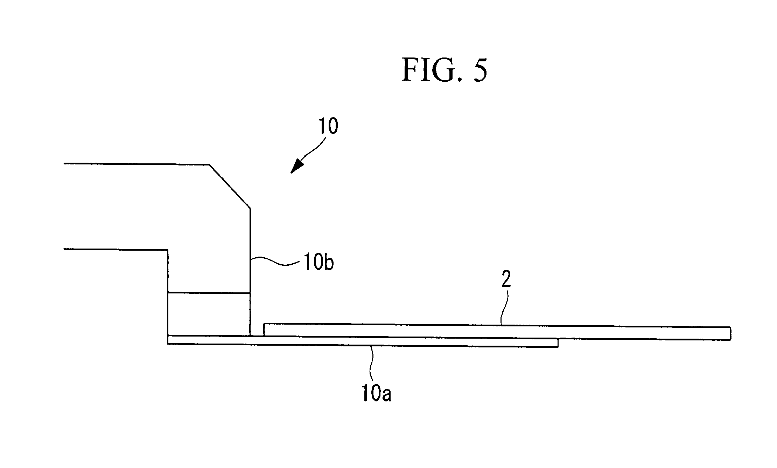

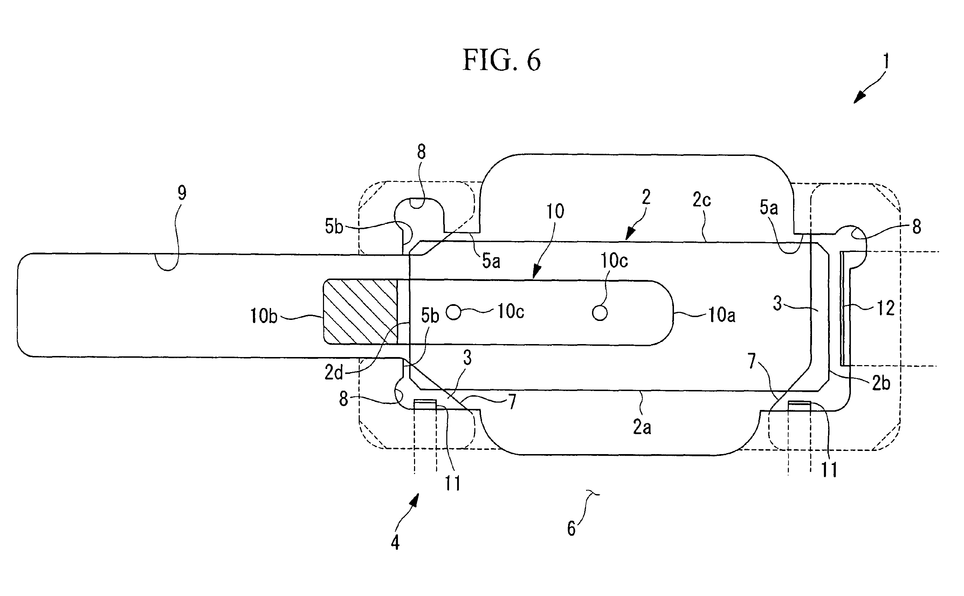

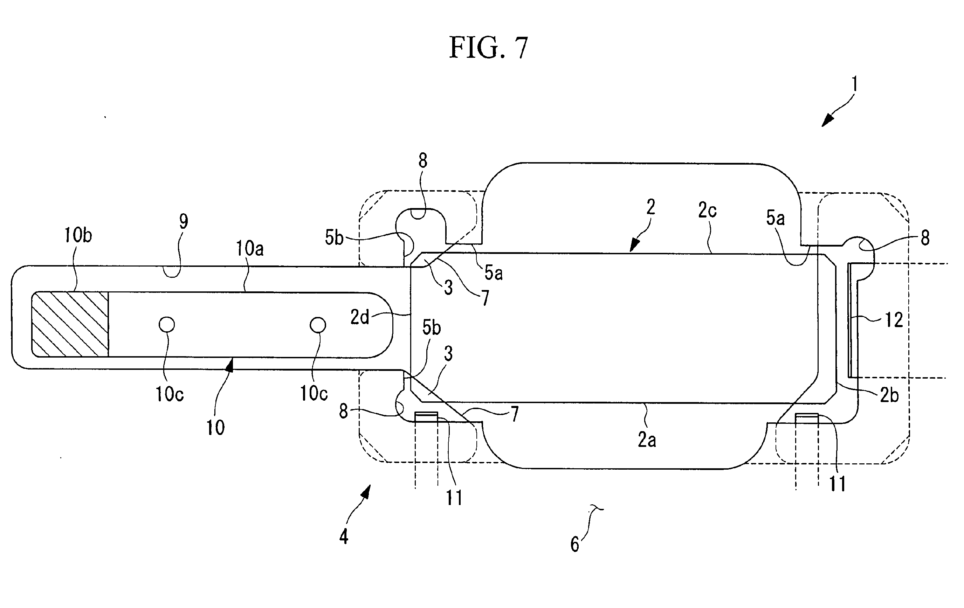

Referring to Fig. 5, for example, the carrier arm 10 includes a support 10a for supporting the bottom surface of the glass slide 2 and an L-shaped arm portion 10b extending upward from an end of the support 10a.
The arm portion 10b supports the support 10a like a cantilever so that the support 10a can be moved three-dimensionally by a moving mechanism (not shown). Referring to Figs. 6 and 7, the support 10a includes suction portions 10c to hold the bottom surface of the glass slide 2 by suction.
In carriage, the glass slide 2 held by the suction portions 10c can be stably carried.

In the stage apparatus 1, an external force is applied to the manipulation protrusion 19 to move the coupling link 14, thereby moving the pressing members 11 and 12 back in directions away from the abutments 5a and 5b, respectively, as shown in Fig. 6. At this time, the pressing member 12 for pressing the short side surface 2b of the glass slide 2 starts moving back first, and the pressing members 11 for pressing the long side surface 2a start moving back afterwards. Thus, the pressing member 12 on the short side moves back farther than the pressing members 11 on the long side.

As shown in Fig. 5, the glass slide 2 is mounted on the support 10a and is carried by the carrier arm 10 while being held by the suction portions 10c. Referring to Fig. 6, the glass slide 2 is released from the suction portions 10c with its four corners in contact with the mounting surfaces 3 provided on the stage apparatus 1. The glass slide 2 can thus be transferred from the carrier arm 10 to the mounting surfaces 3 of the stage apparatus 1.
Referring to Fig. 7, after the glass slide 2 is transferred to the mounting surfaces 3, the carrier arm 10 is lifted above the stage body 6 through the cutout 9 provided in the stage body 6 and is moved back to a position where the carrier arm 10 does not obstruct the movement of the stage apparatus 1.

In this state, the external force being applied to the manipulation protrusion 19 is removed. The removal of the external force allows the coupling link 14 to be moved because the elastic forces of the springs 21 and 22 are biasing the sliders 17 and 18 in such directions as to move the pressing members 11 and 12 toward the side surfaces 2a and 2b, respectively, of the glass slide 2.

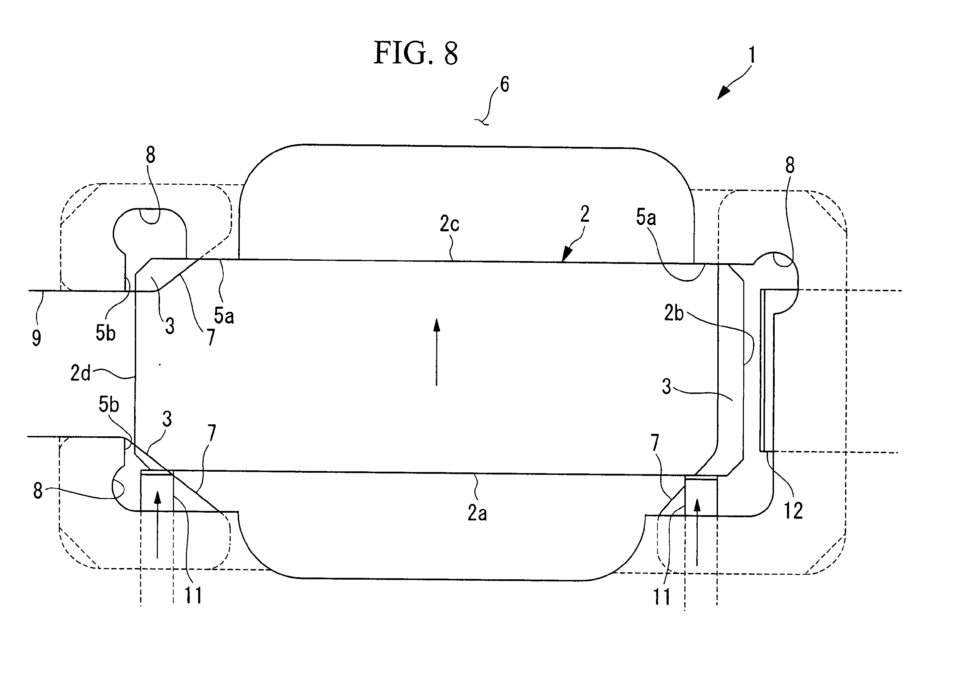

As the coupling link 14 starts moving, all levers 15 and 16 start rotating clockwise, thus allowing linear movement of the sliders 17 and 18 and the pressing members 11 and 12 fixed thereto. Because the pressing member 12 for pressing the short side surface 2b of the glass slide 2 has been moved back farther than the pressing members 11 for pressing the long side surface 2a, the ends of the pressing members 11 first contact and push the long side surface 2a of the glass slide 2, as shown in Fig. 8. Thus, the glass slide 2 is moved in a direction parallel to its short side until the side surface 2c of the glass slide butts against the abutments 5a.

In this case, the glass slide 2 is freely mounted on the mounting surfaces 3 and is subjected only to the external force from the pressing members 11 in contact with the long side surface 2a. Hence, the glass slide 2 is moved in response to the external force from the pressing members 11 without any other external force restraining its movement except for friction with the mounting surfaces 3. The glass slide 2 then contacts the abutments 5a disposed opposite the pressing members 11 and is held between the abutments 5a and the pressing members 11 by the elastic forces of the springs 21.

The glass slide 2 can therefore be prevented from being held on the mounting surfaces 3 while being inclined. In this embodiment, additionally, the pressing members 11 for pressing the long side surface 2a of the glass slide 2 are provided at two positions near the ends on the long side; therefore, the two pressing members 11 press the glass slide 2. The coupling link 14, the levers 15, and the sliders 17 allow the two pressing members 11 to be moved with their ends located at substantially the same position. Hence, if the glass slide 2 is inclined within the horizontal plane, either pressing member 11 butts against the long side surface 2a first. Thus, the glass slide 2 is rotated within the horizontal plane with its position being corrected and is eventually held in position between the two pressing members 11 and the two abutments 5a.

In this case, additionally, the abutments 5a that butt against the long side surface 2c are disposed over a long span so as to butt against the side surface of the glass slide 2 near the ends thereof. Hence, the glass slide 2 is accurately positioned in the direction parallel to its short side when the side surface 2c of the glass slide 2 butts against the abutments 5a.

In this embodiment, additionally, the tapered surfaces 26 provided at the ends of the pressing members 11 contact the side surface 2a of the glass slide 2, so that the pressing force is divided into a horizontal pressing-force component and a vertical pressing-force component at the contact positions of the tapered surfaces 26 and the glass slide 2. That is, the glass slide 2 is moved by the horizontal pressing-force component until its side surface 2c butts against the abutments 5a and is pressed against the mounting surfaces 3 by the vertical pressing-force component. Therefore, even if the glass slide 2 mounted on the mounting surfaces 3 is inclined in the vertical direction for some reason, the pressing members 11 contact and press the glass slide 2 against the mounting surfaces 3 to correct its inclination in the vertical direction.

In this embodiment, additionally, the abutments 5a apply another vertical pressing-force component to the side surface 2c of the glass slide 2 when it contacts the tapered surfaces 27 provided at the ends of the abutments 5a, so that the glass slide 2 is held in position while being pressed against the mounting surfaces 3 more tightly.

As the coupling link 14 is further moved, the pressing member 12 contacts and pushes the short side surface 2b of the glass slide 2. Because the glass slide 2 has been positioned in the direction parallel to its short side, the glass slide 2 is moved only in the direction parallel to its long side by the pressing force applied from the pressing member 12. When the side surface 2d of the glass slide 2 contacts the abutments 5b, the glass slide 2 is held between the abutments 5b and the pressing member 12 and is positioned in the direction parallel to its long side.

In this case, in the stage apparatus 1 according to this embodiment, the pressing member 12 pressing the short side surface 2b of the glass slide 2 is pressed by a larger elastic force than the pressing members 11 pressing the long side surface 2a. This allows the glass slide 2 to be smoothly moved against friction occurring between the side surfaces 2a and 2c of the glass slide 2, which have been positioned in the short-side direction, and the pressing members 11 and the abutments 5a, so that the glass slide 2 can also be accurately positioned in the direction parallel to its long side.

Because the tapered surfaces 26 and 27 are also provided at the ends of the pressing member 12 and the abutments 5b, respectively, they press the glass slide 2 against the mounting surfaces 3 more tightly, thus accurately positioning the glass slide 2 in the vertical direction while maintaining it in a horizontal position.
In this case, additionally, the springs 21 and 22 have the minimum elastic forces required to reliably hold the side surfaces 2a and 2b, respectively, of the glass slide 2. This minimizes the vertical force exerted on the steel sheets 7, for example, stainless steel sheets, constituting the mounting surfaces 3 of the glass slide 2 to prevent vertical deformation of the steel sheets 7, so that the glass slide can be accurately held.

Thus, the stage apparatus 1 according to this embodiment first presses and positions the long side surface 2a of the glass slide 2 and then presses and positions the short side surface 2b, thus providing different pressing timings. This provides the advantage that the glass slide 2 can be accurately held in position without encountering the problem resulting from simultaneous pressing of the two adjacent side surfaces 2a and 2b, that is, the problem of the glass slide 2 being held while being inclined within the horizontal plane or being inclined in the vertical direction.

Although the stage apparatus 1 for holding in position the glass slide 2 having a size of 76 x 26 mm and a thickness of 0.8 to 2.0 mm has been described as an example in this embodiment, the present invention is not limited thereto. The present invention may also be applied to, for example, a stage apparatus 1 for holding in position a glass slide 2 having a size of 76 x 52 mm and a thickness of 0.8 to 2.0 mm. However, the present invention is not limited thereto and may be applied to stage apparatuses 1 for holding glass slides 2 of other sizes.

In the description of the above embodiment, the long side surface 2a of the glass slide 2 is first pressed so that the glass slide 2 butts against the abutments 5a over a long span and is positioned accordingly. Alternatively, the short side surface 2b may first be pressed if the abutments 5a that butt against the glass slide 2 over a long span are disposed on the short side.

The external force applied to the manipulation protrusion 19 of the coupling link 14 may be manual. Alternatively, the external force may be applied by bringing an external fixed member (not shown) into contact with the manipulation protrusion 19 as the stage apparatus 1 is moved horizontally. This enables automatic mounting of the glass slide 2.

Types of the stage apparatus 1 according to this embodiment include a stage apparatus equipped with an actuator (not shown) for actuating a stage body and an adapter-type stage apparatus attached detachably/attachably to a member to be actuated by an actuator.

## Claims

1. A stage apparatus comprising:
mounting surfaces on which a glass slide is mounted;
abutments against which two adjacent side surfaces of the glass slide mounted on the mounting surfaces butt; and
a pressing mechanism for pressing two side surfaces opposite the two respective side surfaces that butt against the abutments in respective directions toward the abutments;
wherein the pressing mechanism includes a plurality of pressing members for pressing the two side surfaces of the glass slide at different timings.

2. The stage apparatus according to Claim 1, wherein
the abutments butt against the two side surfaces of the glass slide over different spans; and
the pressing mechanism presses the side surface opposite the side surface that butts against the abutments over a longer span before pressing the side surface opposite the side surface that butts against the abutments over a shorter span.

3. The stage apparatus according to Claim 1, wherein the pressing members each include an elastic member for producing a pressing force to press the side surfaces of the glass slide.

4. The stage apparatus according to Claim 2, wherein
the pressing members each include an elastic member for producing a pressing force to press the side surfaces of the glass slide; and
the elastic member of the pressing member for pressing the side surface opposite the side surface that butts against the abutments over the shorter span produces a larger pressing force than the elastic member of the pressing member for pressing the side surface opposite the side surface that butts against the abutments over the longer span.

5. The stage apparatus according to Claim 1, wherein the pressing mechanism includes a link mechanism for actuating the pressing members together.

6. The stage apparatus according to Claim 1, wherein tapered surfaces are provided at pressing ends of the pressing members that press the side surfaces of the glass slide so as to gradually extend backward toward the mounting surfaces.
